# EUROPÄISCHE PATENTSCHRIFT

(11) **EP 3 430 884 B1**
(45) Veröffentlichungstag und Bekanntmachung des Hinweises auf die Patenterteilung: **12.05.2021**
(21) Anmeldenummer: 18000590.2
(22) Anmeldetag: 11.07.2018
(51) Int. Cl.: A01D 78/10

(54) **KREISELSCHWADER**
ROTARY RAKE
ANDAINEUSE GYROSCOPIQUE

(30) Priorität: 19.07.2017 DE 102017006804
(43) Veröffentlichungstag der Anmeldung: 23.01.2019
(73) Patentinhaber: Maschinenfabrik Bernard Krone GmbH & Co. KG, 48480 Spelle (DE)
(72) Erfinder: Afting, Andreas, 48488 Emsbüren (DE)

(56) Entgegenhaltungen:
- EP-A1- 0 937 383
- EP-A1- 2 022 316
- EP-A1- 3 095 316
- EP-A2- 2 057 890

## Beschreibung

Die vorliegende Erfindung betrifft einen Kreiselschwader zum Zusammenführen von auf einer Feld- oder Wiesenfläche liegendem Erntegut in der Art von Heu, Stroh oder angewelktem Grüngut nach dem Oberbegriff des Patentanspruches 1. Derartige Kreiselschwader sind für sich bekannt.

Die Druckschriften EP 2 057 890 A2 und EP 2 022 316 A1 offenbaren jeweils eine Heuwerbungsmaschine mit Rechkreiseln, wobei wenigstens ein Rechkreisel über einen um eine Achse schwenk- oder klappbar an einem Rahmen der Heuwerbungsmaschine angelenkten Tragarm mit dem Rahmen verbunden und durch Schwenken oder Klappen des Tragarms von einer Arbeitsposition in eine Transportposition überführbar ist.

Aus der EP 2 145 529 A1 wird eine Heuwerbungsmaschine in der Art eines Kreiselschwaders näher veranschaulicht, bei dem an einem Maschinenrahmen beidseitig über jeweils einen längenunveränderbar ausgebildeten Tragarm zwei Rechkreisel angelenkt sind. Zum Betreiben des Kreiselschwaders an einer landwirtschaftliche Zug- und Antriebsmaschine ist im Frontbereich eine Ankupplungsvorrichtung und im Heckbereich ein Fahrwerk vorgesehen. Zum Antrieb der Rechkreisel erstrecken sich etwa entlang von den Tragarmen Antriebsgelenkwellen, die von einem Verteilergetriebe am Maschinenrahmen zu den jeweiligen Rechkreiseln führen. Damit wird es ermöglicht, dass die Antriebsgelenkwellen der Rechkreisel bei der Überführung der Rechkreisel aus der bodenparallelen Arbeitsstellung in eine etwa vertikale Transportstellung und zurück etwa die gleiche Schwenkbewegung durchführen wie die Tragarme. Aufgrund dieser funktionalen Zusammenhänge sind solche Kreiselschwader mit dem Mangel behaftet, dass bei den aktuell geforderten Arbeitsbreiten die Verschiebewege in den Antriebsgelenkwellen nicht genügend groß ausgebildet werden können. Es ist somit nicht mehr möglich, die Antriebsgelenkwellen sowohl in der Transportstellung, wenn die Länge aufgrund der geringen zulässigen Transporthöhe nur sehr kurz sein darf, als auch in der Arbeitsstellung, wenn die Länge sehr groß muss, mit der notwendigen Überdeckungslänge in den Schiebeprofilen zu versehen. Bei der Überführung von der Transportstellung in die Arbeitsstellung würden die Schiebeprofile daher auseinander fallen.

Aufgabe der Erfindung ist es deshalb, einen Kreiselschwader vorzuschlagen, bei dem die funktionalen Zusammenhänge für einen betriebssicheren Aushub und Antrieb der Kreiselrechen unter Einschluss einer optimalen Bodenanpassung einsatzsicher durchführbar sind.

Erfindungsgemäß wird die genannte Aufgabe durch einen Kreiselschwader gemäß Anspruch 1 gelöst. Bevorzugte Ausgestaltungen der Erfindung sind Gegenstand der abhängigen Ansprüche.

Gemäß der Erfindung wird ein Kreiselschwader mit einem in Fahrt- und Arbeitsrichtung sich erstreckenden Maschinenrahmen vorgeschlagen, an dem eine frontseitige Kupplungsvorrichtung zum Ankuppeln an eine landwirtschaftliche Zug- und Antriebsmaschine und ein Fahrwerk zur Abstützung auf dem Boden vorgesehen ist, mit zumindest einem an jeder Maschinenrahmenseite angeordneten, um eine vertikale Achse umlaufend angetriebenen Kreiselrechen, der über einen zumindest in etwa quer zum Maschinenrahmen ausgerichteten, in seiner Länge veränderbaren Tragarm aus einer bodenparallelen Arbeitsstellung in eine zumindest annähernd vertikale Transportstellung und zurück überführbar ist, wobei jeder Tragarm am Maschinenrahmen um eine, gegenüber einer horizontalen Ebene spitzwinklig geneigte Tragarmschwenkachse schwenkbar gelagert ist, wobei zum Antrieb der Kreiselrechen eine Antriebseinrichtung vorgesehen ist, die aus einem Verteilergetriebe und jeweils einer vom Verteilergetriebe aus zu den Kreiselrechen sich erstreckenden Antriebsgelenkwelle gebildet ist. Das Verteilergetriebe ist am Maschinenrahmen in einer Position oberhalb von den Kreiselrechen angebracht. Der Neigungswinkel der Tragarmschwenkachse ist auf einen Bereich von 5° bis 15° beschränkt. Eine beim Entlangführen der Kreiselrechen über Bodenunebenheiten der Feld- oder Wiesenfläche erforderliche Höhenänderung der Kreiselrechen gegenüber dem Fahrwerk des Kreiselschwaders ruft eine Längenänderung in einer Überdeckung von Schiebeprofilen der Antriebsgelenkwellen hervor. Der Neigungswinkel der Tragarmschwenkachse ist dabei so gestaltet, dass der Quotient aus der Längenänderung der Antriebsgelenkwellen und der Größe der erforderlichen Höhenänderung einen vorbestimmten Grenzwert nicht übersteigt,

Der Kreiselschwader zeichnet sich dadurch aus, dass das Verteilergetriebe mit einem Abstandsmaß von 30% bis 75% des Außendurchmessers des Kreiselrechens vor der Mittelachse des Kreiselrechens am Maschinenrahmen angebracht ist, und dass bei einer erforderlichen Höhenänderung im Bereich von ± 250 mm ein Quotient aus einer Längenänderung der Antriebsgelenkwellen und der Größe der erforderlichen Höhenänderung einen Grenzwert von 8% oder von 4% oder weniger nicht übersteigt.

Nach der Erfindung wird also ein Kreiselschwader zum Zusammenführen von landwirtschaftlichem Erntegut vorgeschlagen, bei dem an jeder Seite des Maschinenrahmens des Kreiselschwaders zumindest ein Kreiselrechen zur Bearbeitung des landwirtschaftlichen Erntegutes vorgesehen. Um die Problematik der Bereitstellung betriebssicherer Antriebe für die Kreiselrechen mit den Anforderungen nach immer größeren Verstellbewegungen zur Ermöglichung größerer Arbeitsbreiten in Einklang zu bringen, wurde der Kreiselschwader mit einer Antriebseinrichtung versehen, bei der ausgehend von einem Verteilergetriebe die Antriebsgelenkwellen sich in schräg zum Maschinenrahmen verlaufender Verbindung zu den Kreiselrechen erstrecken. Hierbei ist es erforderlich, dass die Antriebsgelenkwellen von dem Verteilergetriebe in einer Lage deutlich oberhalb und deutlich vor oder hinter den Kreiselrechen an diesen heran geführt werden. Als realistisches Abstandsmaß für die Anordnung des Verteilergetriebes vor oder hinter den Kreiselrechen empfiehlt sich ein Maß, welches im Bereich von 30% bis 75% des Außendurchmessers der Kreiselrechen liegt. Bei einer solchen Gestaltung des Antriebes der Kreiselrechen ergibt sich bei der Überführung aus der Arbeitsstellung in die Transportstellung und umgekehrt der Vorteil, dass die erforderlichen Längenverstellungen in den Tragarmen der Kreiselrechen nur eine geringe Längenänderung der Länge der Antriebsgelenkwellen erfordern. Das bedeutet, dass die erforderliche Längenveränderung innerhalb der Länge der Antriebsgelenkwellen bei der Aushubbewegung bzw. bei der Absenkbewegung der Kreiselrechen relativ unabhängig von der Längenveränderung der Tragarme und damit von der Verstellung der Arbeitsbreite wird.

Im Hinblick auf die vorbeschriebene Gestaltung der Antriebe der Kreiselrechen des erfindungsgemäßen Kreiselschwaders gibt es allerdings eine weitere Entwicklungsmaßgabe, die es zu beachten gilt. Die optimale Anpassung der Bearbeitung der Kreiselzinken der Kreiselrechen an die jeweilige Bodenoberfläche der Feld- und Wiesenfläche ist ein Parameter, der die Arbeitsqualität des Kreiselschwaders in entscheidender Weise mitbestimmt. Im Zusammenhang mit der Optimierung der funktionalen Zusammenhänge der Antriebseigenschaften hat sich gezeigt, dass die unter einem Neigungswinkel zu einer horizontalen Ebene spitzwinklig geneigt angeordneten Tragarmschwenkachsen der Tragarme der Kreiselrechen einen unmittelbaren Einfluss auf die Qualität der Bodenanpassung der Kreiselrechen ausüben. Die beim Entlangführen der Kreiselrechen über den Bodenunebenheiten der Feld- oder Wiesenfläche erforderliche Höhenänderung der Kreiselrechen gegenüber dem Fahrwerk des Kreiselschwaders ruft eine Längenänderung in der Überdeckung der Schiebeprofile der Antriebsgelenkwellen hervor. Da diese Längenänderung in der Überdeckung der Schiebeprofile unter dem Einfluss von übertragenem Drehmoment sich vollziehen muss, ergibt sich daraus eine Kraft, die sich negativ auf eine gute Bodenanpassung auswirkt. Bei Versuchen zur Verbesserung der Bodenanpassung hat sich gezeigt, dass die Längenänderung in der Überdeckung der Schiebeprofile sich in Abhängigkeit von dem Neigungswinkel der Tragarmschwenkachse gegenüber einer horizontalen Ebene verringert oder vergrößert. Dieser vorteilhafte Effekt wird nun in erfindungsgemäßer Weise dazu genutzt, die Bodenanpassung zu optimieren. Der Neigungswinkel der Tragarmschwenkachse wird so ausgewählt, dass der Quotient aus der Längenänderung der Antriebswellen und der Größe der erforderlichen Höhenänderung an den Kreiselrechen einen vorbestimmten Grenzwert nicht übersteigt. In einer ersten vorteilhaften Ausführungsform kann ein solcher Grenzwert bei 8% festgelegt sein, wenn die erforderliche Höhenänderung auf einen Bereich von ± 250 mm bezogen ist. In weiteren Ausführungsformen kann ein solcher Grenzwert auch bei 4% oder auch darunter liegen.

Nachfolgend wird ein vorteilhaftes Ausführungsbeispiel der Erfindung anhand einer Zeichnung beschrieben. In der Zeichnung zeigt:
- Fig. 1:: eine Seitenansicht eines landwirtschaftlichen Kreiselschwaders zur Bearbeitung von halmförmigem Erntegut gemäß der Erfindung in der Arbeitsstellung;
- Fig. 2:: eine teilweise abgebrochen und vergrößert dargestellte Seitenansicht des Kreiselschwaders nach Fig.1;
- Fig. 3:: eine teilweise abgebrochen dargestellte Ansicht von oben auf den Abschnitt des Kreiselschwaders nach Fig. 2;
- Fig. 4:: eine analytische Diagrammdarstellung über den Zusammenhang der Längenänderung der Gelenkwelle und der Höhenänderung am Kreiselrechen;

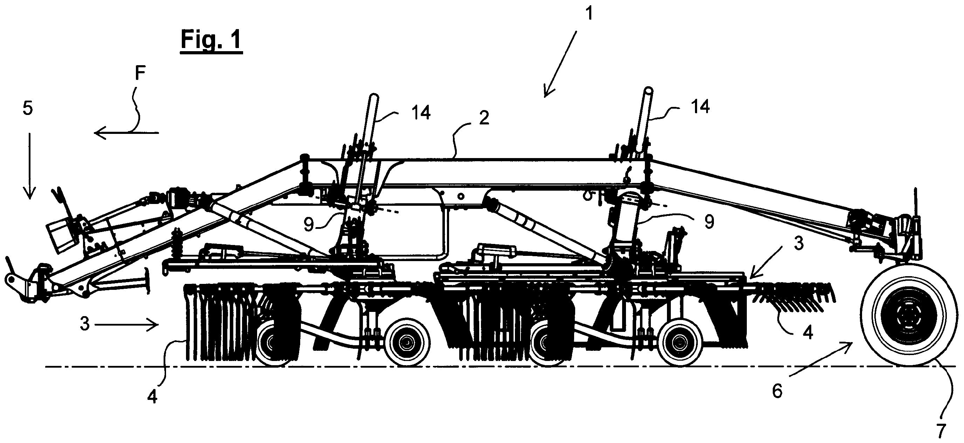

In Fig. 1 ist eine vorteilhafte Ausführungsform eines Kreiselschwaders 1 in der Arbeitsstellung wiedergegeben. Hierbei handelt es sich einen Kreiselschwader, der beidseitig von einem Maschinenrahmen 2 jeweils einen Kreiselrechen 3 mit daran angebrachten Kreiselzinken 4 zum Zusammenführen von auf einer Feld- oder Wiesenfläche liegendem Erntegut aufweist. Zum Anbringen an eine landwirtschaftliche Zug- und Antriebsmaschine in der Art eines Traktors ist dem Maschinenrahmen 2 frontseitig eine Kupplungsvorrichtung 5 zugeordnet. Heckseitig weist der Maschinenrahmen ein Fahrwerk 6 mit Laufrädern 7 zur Abstützung auf einer Feld- oder Wiesenfläche auf. Unter den Kreiselrechen 3 befindet sich eine Stütz- und Tastradanordnung, deren Stütz- und Tasträder 8 für die richtige Arbeitshöhe der Kreiselzinken 4 sorgen. In der Arbeitsstellung wird der dargestellte Kreiselschwader 1 in Fahrt-Arbeitsrichtung F über die Feld- und Wiesenfläche gezogen, wobei dann die rotierend angetriebenen Kreiselrechen 3 einen Erntegutschwad seitlich von dem Kreiselschwader formen. Ebenso kann der Erfindung jedoch auch ein Kreiselschwader zugrunde gelegt sein, der zur Formung eines Mittelschwades, also eines mittig zwischen den Kreiselrechen 3 abzulegenden Schwades eingerichtet ist. Weiterhin kann die Erfindung auch einem Kreiselschwader verwendet werden, dessen Maschinenrahmen an jeder Maschinenrahmenseite mit zwei oder mehreren Kreiselrechen bestückt ist.

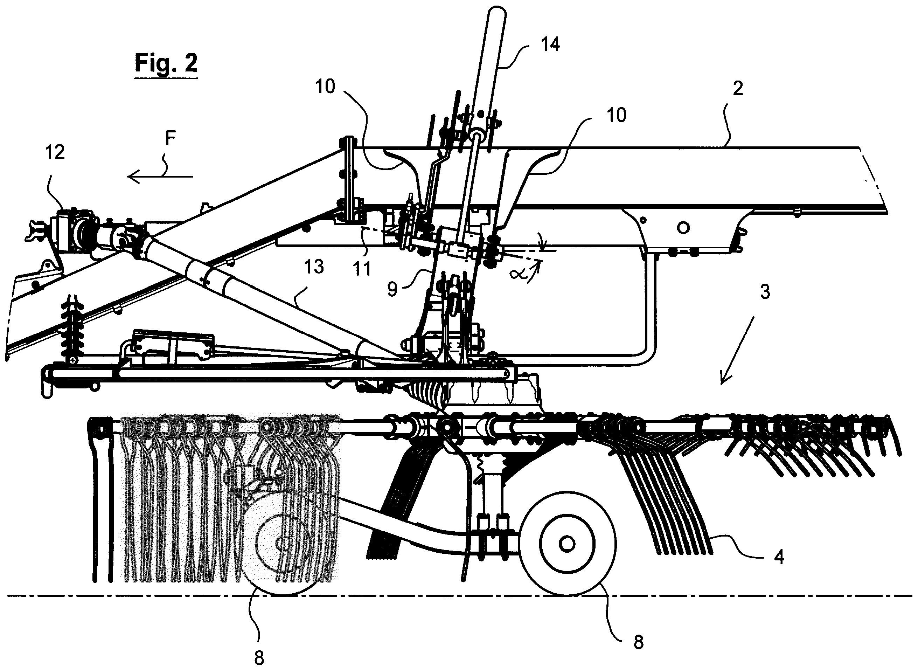

Aus der Fig. 2 geht in einer detaillierteren Ansicht hervor, wie der Kreiselrechen 3 an dem Maschinenrahmen 2 angelenkt ist. Zur Anlenkung des Kreiselrechens 3 an den Maschinenrahmen 2 ist ein Tragarm 9 vorgesehen, welcher in zwei Halterungen 10 des Maschinenrahmens 2 um eine, unter einem Neigungswinkel α zu einer horizontalen Ebene spitzwinkelig geneigte Tragarmschwenkachse 11 schwenkbar gelagert ist. Der Neigungswinkel α bezieht sich dabei auf eine horizontale Ebene, die mit einer Parallelen zur Oberfläche der Feld- oder Wiesenfläche gleich zusetzen ist. Die Neigung der Tragarmschwenkachse 11 ist dabei so gewählt, dass die schräge Ausrichtung entgegen der Fahrt- und Arbeitsrichtung F zum Erdboden hin gerichtet ist. Hier in der Fig. 2 ist der Kreiselrechen 3 in seiner Arbeitsstellung gezeigt. Zur Überführung des Kreiselrechens 3 aus dieser bodenparallelen Arbeitsstellung in eine etwa vertikale Transportstellung wird der Tragarm 9 mit dem daran angebrachten Kreiselrechen 3 durch die Wirkung einer hydraulischen Kolben-Zylinderanordnung 14 hochgeschwenkt. Zum Antrieb des Kreiselrechens 3 ist eine Antriebseinrichtung vorgesehen, welche aus einem Verteilergetriebe 12 und aus Antriebsgelenkwellen 13 gebildet ist. Wie aus der Fig. 2 weiterhin hervorgeht, ist das Verteilergetriebe 12 mit einem Abstandsmaß von 30% bis 75% des Außendurchmessers des Kreiselrechens 3 vor der Mittelachse des Kreiselrechens 3 am Maschinenrahmen 2 angebracht. Von hieraus ist dann die Antriebsgelenkwelle 13 in einer schräg nach unten und schräg zur Außenseite des Kreiselschwaders 2 gerichteten Anordnung zu dem Kreiselrechen 3 geführt. Bei der Überführung des Kreiselrechens 3 aus der Arbeitsstellung in die Transportstellung kann die Antriebsgelenkwelle der Schwenkbewegung des Tragarms 9 mit dem daran angeordneten Kreiselrechen 3 folgen. Dabei vollzieht sich eine Längenveränderung der Antriebsgelenkwelle 13 dadurch, dass deren Schiebeprofile zusammengeschoben werden.

Eine Längenveränderung der Antriebsgelenkwelle 13 ergibt sich auch beim Arbeitseinsatz, wenn nämlich der Kreiselrechen 3 mit seinen Stütz- und Tasträdern 8 Bodenunebenheiten überfährt, von denen das Fahrwerk 6 des Maschinenrahmens 2 nicht betroffen ist. Umgekehrt kann die Längenveränderung an der Antriebsgelenkwelle 13 auch dann entstehen, wenn das Fahrwerk 6 des Maschinenrahmens 2 über Bodenwellen geführt wird, während die Stütz- und Tasträdem 8 diese nicht erfahren. Unter diesen Einsatzverhältnissen muss die Längenänderung in der Antriebsgelenkwelle 13 jedoch unter dem Einfluss eines von der Antriebsgelenkwelle 13 zu übertragenden Drehmomentes erfolgen. Das Zusammenschieben der Schiebeprofile der Antriebsgelenkwelle 13 verursacht eine Kraft, die einen negativen Einfluss auf die Bodenanpassung des Kreiselrechens 3 ausübt. Zur Verbesserung der Bodenanpassung wird hier nun in vorteilhafter Weise ausgenutzt, dass die Längenänderung in der Überdeckung der Schiebeprofile von dem Neigungswinkel der Tragarmschwenkachse gegenüber einer horizontalen Ebene abhängt. Aufgrund dieses Effektes kann nun in erfindungsgemäßer Weise die Bodenanpassung optimiert werden. Der Neigungswinkel der Tragarmschwenkachse ist so ausgewählt, dass der Quotient aus der Längenänderung der Antriebswellen und der Größe der erforderlichen Höhenänderung an den Kreiselrechen einen vorbestimmten Grenzwert nicht übersteigt. In einer ersten vorteilhaften Ausführungsform kann ein solcher Grenzwert bei 8% festgelegt sein, wenn die erforderliche Höhenänderung auf einen Bereich von ± 250 mm bezogen ist. In weiteren Ausführungsformen kann ein solcher Grenzwert auch bei 4% oder auch darunter liegen.

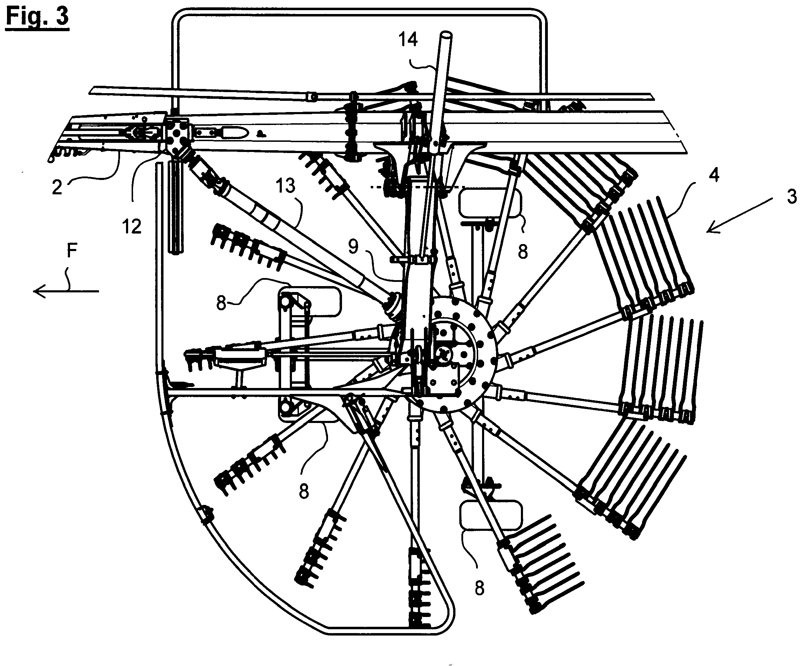

Fig. 3 zeigt den Kreiselrechen 3 in einer Ansicht von oben, so dass hier die Gestaltung der Antriebseinrichtung noch weiter verdeutlicht wird. Aus einer Position oberhalb des Maschinenrahmens 2 (Fig. 1 und 2) erstreckt sich die Antriebsgelenkwelle 13 in einer schräg nach und außen zeigenden Ausrichtung vom Verteilergetriebe 12 zum Kreiselrechen 3. Bei einer Anwendung an einem sogenannten Mittelschwader ergibt sich am Verteilergetriebe ein Antriebschema, das einer Y-Anordnung gleicht.

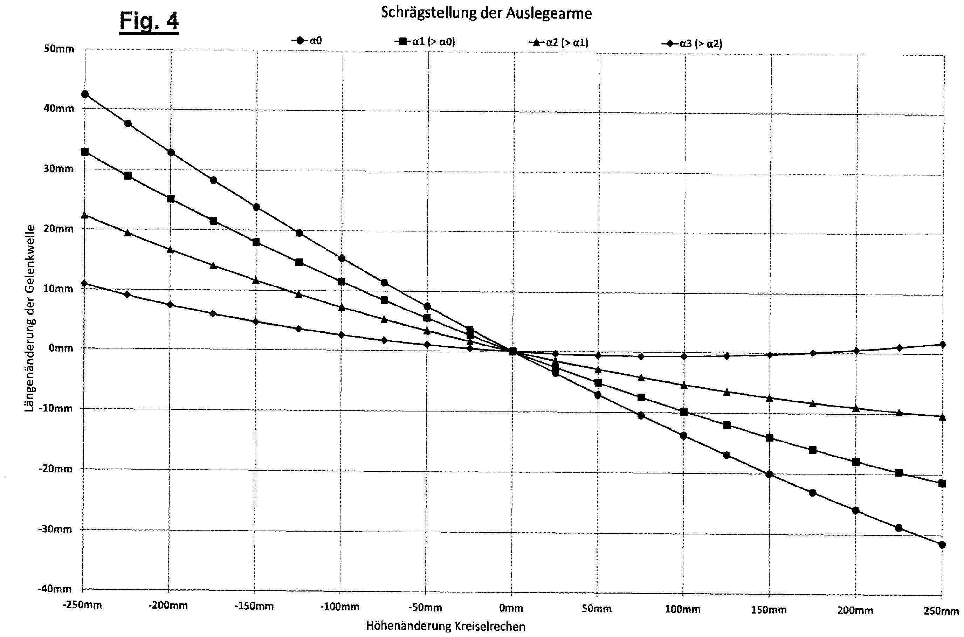

Aus der Fig. 4 wird in einer analytischen Diagrammdarstellung der Zusammenhang zwischen der Längenänderung an der Antriebsgelenkwelle 13 und der Höhenänderung am Kreiselrechen 3 offenbart. Für mehrere Neigungswinkel a, unter denen die Tragarmschwenkachse 11 am Maschinenrahmen 2 angeordnet sein kann, sind hier die jeweiligen Wertepaare für die Längenänderung und die Höhenänderung experimentell ermittelt worden und in einem übersichtlichen Diagramm aufgetragen worden. Bei ansteigendem Neigungswinkel α nähern sich die jeweiligen Kurven immer mehr einer horizontalen O-Marke für die Längenänderung an der Antriebsgelenkwelle 13 an. Vorteilhaft liegen die Werte für den Neigungswinkel α in einem Bereich von 5° bis 15°.

## Patentansprüche

1. Kreiselschwader mit einem in Fahrt- und Arbeitsrichtung (F) sich erstreckenden Maschinenrahmen (2), an dem eine frontseitige Kupplungsvorrichtung (5) zum Ankuppeln an eine landwirtschaftliche Zug- und Antriebsmaschine und ein Fahrwerk (6) zur Abstützung auf dem Boden vorgesehen ist, mit zumindest einem an jeder Maschinenrahmenseite angeordneten, um eine vertikale Achse umlaufend angetriebenen Kreiselrechen (3), der über einen zumindest in etwa quer zum Maschinenrahmen (2) ausgerichteten, in seiner Länge veränderbaren Tragarm (9) aus einer bodenparallelen Arbeitsstellung in eine zumindest annähernd vertikale Transportstellung und zurück überführbar ist, wobei jeder Tragarm (9) am Maschinenrahmen (2) um eine, gegenüber einer horizontalen Ebene spitzwinklig geneigte Tragarmschwenkachse (11) schwenkbar gelagert ist, wobei zum Antrieb der Kreiselrechen (3) eine Antriebseinrichtung vorgesehen ist, die aus einem Verteilergetriebe (12) und jeweils einer vom Verteilergetriebe (12) aus zu den Kreiselrechen (3) sich erstreckenden Antriebsgelenkwelle (13) gebildet ist, wobei das Verteilergetriebe (12) am Maschinenrahmen (2) in einer Position oberhalb von den Kreiselrechen (3) angebracht ist, wobei der Neigungswinkel der Tragarmschwenkachse (11) auf einen Bereich von 5° bis 15° beschränkt ist, wobei eine beim Entlangführen der Kreiselrechen (3) über Bodenunebenheiten der Feld- oder Wiesenfläche erforderliche Höhenänderung der Kreiselrechen (3) gegenüber dem Fahrwerk (6) des Kreiselschwaders eine Längenänderung in einer Überdeckung von Schiebeprofilen der Antriebsgelenkwellen (13) hervorruft, wobei der Neigungswinkel (a) der Tragarmschwenkachse (11) so gestaltet ist, dass der Quotient aus der Längenänderung der Antriebsgelenkwellen (13) und der Größe der erforderlichen Höhenänderung einen vorbestimmten Grenzwert nicht übersteigt, **dadurch gekennzeichnet, dass** das Verteilergetriebe (12) mit einem Abstandsmaß von 30% bis 75% des Außendurchmessers des Kreiselrechens (3) vor der Mittelachse des Kreiselrechens (3) am Maschinenrahmen (2) angebracht ist, und dass bei einer erforderlichen Höhenänderung im Bereich von ± 250 mm ein Quotient aus einer Längenänderung der Antriebsgelenkwellen (13) und der Größe der erforderlichen Höhenänderung einen Grenzwert von 8% oder von 4% oder weniger nicht übersteigt.

2. Kreiselschwader nach Anspruch 1, **dadurch gekennzeichnet, dass** die vom Verteilergetriebe zu- und abgeführten Antriebsstränge eine Y-Anordnung bilden.

3. Kreiselschwader nach zumindest einem der Ansprüche 1 bis 2, **dadurch gekennzeichnet, dass** die sich zwischen dem Verteilergetriebe (12) und den Kreiselrechen (3) erstreckenden Antriebsgelenkwellen (13) in der Arbeitsstellung aufgrund von unterschiedlichen Geländestrukturen eine Längenänderung erfahren, die sich in Abhängigkeit von dem Neigungswinkel (a) der Tragarmschwenkachse (11) gegenüber einer horizontalen Ebene verringert oder vergrößert.

4. Kreiselschwader nach zumindest einem der Ansprüche 1 bis 3, **dadurch gekennzeichnet, dass** die sich zwischen dem Verteilergetriebe (12) und den Kreiselrechen (3) erstreckenden Antriebsgelenkwellen (13) in der Arbeitsstellung aufgrund von unterschiedlichen Geländestrukturen eine Längenänderung erfahren, die sich in Abhängigkeit von der Größe der erforderlichen Höhenänderung ändert.

## Claims

1. Rotary swather with a machine frame (2) extending in the travel and working direction (F), on which a front coupling device (5) is provided for a connection to an agricultural tractor and a running gear (6) for support on the ground, with at least one rotary rake (3) arranged on each side of the machine frame and driven around a vertical axis, which rotary rake can be moved from a working position parallel to the floor to and from an at least approximately vertical transport position by means of a support arm (9) which is variable in length and which is arranged at least approximately transversely to the machine frame (2), each support arm (9) being pivotably mounted on the machine frame (2) about a support arm pivot axis (11) Inclined at an acute angle relative to a horizontal plane, a drive device being provided to drive the rotary rake (3), which drive device is formed with a transfer case (12) and one drive shaft (13) each, said drive shaft extending from the transfer case (12) to the rotary rakes (3), the transfer case (12) being attached to the machine frame (2) In a position above the rotary rakes (3), the angle of Inclination of the support arm pivot axis (11) being limited to a range from 5° to 15°, a change In height of the rotary rakes (3) relative to the running gear (6) of the rotary swather that is necessary when guiding the rotary rakes (3) over uneven ground in the field or meadow resulting in a change in length In an overlap of the sliding profiles of the drive shafts (13), the angle of inclination (α) of the support arm pivot axis (11) being designed such that the quotient of the change in length of the drive shafts (13) and the extent of the required height change does not exceed a predetermined limit, **characterised In that** the transfer case (12) is attached to the machine frame (2) at a distance of 30% to 75% of the outer diameter of the rotary rake (3) in front of the centre axis of the rotary rake (3) and **in that**, In the event that a change in height in the range of ± 250 mm Is necessary, a quotient of a change in length of the drive shafts (13) and the extent of the required change in height does not exceed a limit of 8% or 4% or less.

2. Rotary swather according to claim 1, **characterised in that** the drive trains fed to and removed from the transfer case form a Y-arrangement.

3. Rotary swather according to at least one of claims 1 to 2, **characterised in that** the drive shafts (13) extending between the transfer case (12) and the rotary rakes (3) experience a change in length in the working position due to different terrain structures, which change In length decreases or increases depending on the angle of inclination (a) of the support arm pivot axis (11) with respect to a horizontal plane.

4. Rotary swather according to at least one of claims 1 to 3, **characterised In that** the drive shafts (13) extending between the transfer case (12) and the rotary rakes (3) experience a change in length in the working position due to different terrain structures, which changes depending on the extent of the change in height required.

## Revendications

1. Andaineuse rotative comprenant un cadre de machine (2) s'étendant dans la direction de circulation et de travail (F), muni d'un dispositif d'attelage frontal (5) pour être attelé à une machine agricole de traction et d'entraînement ainsi qu'un châssis d'appui (6) sur le sol,
- au moins un râteau rotatif (3) entraîné en rotation autour d'un axe vertical, sur chaque côté du cadre de machine (2), ce râteau rotatif étant mis en position de déplacement sensiblement verticale à partir d'une position de travail parallèle au sol, par un bras de support (9) de longueur variable, orienté sensiblement transversalement au cadre de machine (2), et en retour,
- chaque bras de support (9) étant monté pivotant sur le cadre de machine (2) autour d'un axe de pivotement de bras de support (11) incliné selon un angle aigu par rapport à un plan horizontal,
- une installation d'entraînement étant prévue pour entraîner les râteaux rotatifs (3), cette installation se composant d'une transmission distributrice (12) et d'un arbre de transmission, articulé (13) s'étendant entre la transmission distributrice (12) et les râteaux rotatifs (3),
- la transmission distributrice (12) étant installée sur le cadre de machine (2) dans une position au-dessus des râteaux rotatifs (3),
- l'angle d'inclinaison de l'axe de pivotement du bras de support (11) étant limité à une plage comprise entre 5° et 15°,
- la variation de hauteur lors du passage des râteaux rotatifs (3) sur des irrégularités du sol du champ ou du pré, nécessaire des râteaux rotatifs (3) par rapport au châssis (6) de l'andaineuse rotative, produit une variation de longueur dans le chevauchement des profils coulissants des arbres d'entraînement articulés (13),
- l'angle d'inclinaison (a) de l'axe de pivotement du bras de support (11) étant tel que le quotient de la variation de longueur des arbres articulés d'entraînement (13) et de l'amplitude de la variation nécessaire de hauteur ne dépasse pas une certaine valeur limite, andaineuse rotative **caractérisée en ce que**
la transmission distributrice (12) est montée sur le cadre de machine (2) à une distance comprise entre 30% et 75% du diamètre extérieur du râteau rotatif (3) en avant de l'axe central du râteau rotatif (3), et
pour une variation de hauteur, nécessaire dans une plage de ± 250 mm, le quotient de la variation de longueur des arbres articulés d'entraînement (13) et de l'amplitude de la variation nécessaire de hauteur est inférieur ou égal à un seuil de 8% ou de 4% ou moins.

2. Andaineuse rotative selon la revendication 1,
**caractérisée en ce que**
les lignes de transmission issues ou partant de la transmission distributrice forment une disposition en Y.

3. Andaineuse rotative selon au moins l'une des revendications 1 et 2,
**caractérisée en ce que**
les arbres d'entraînement articulés (13) qui s'étendent entre la transmission distributrice (12) et les râteaux rotatifs (3) en position de travail, du fait des différences de structure de terrain, subissent une variation de longueur qui diminue ou augmente en fonction de l'angle d'inclinaison (a) de l'axe de pivotement de bras de support (11) par rapport à un plan horizontal.

4. Andaineuse rotative selon au moins l'une des revendications 1 à 3,
**caractérisée en ce que**
les arbres de transmission articulés (13) entre la transmission distributrice (12) et les râteaux rotatifs (3) en position de travail, subissent une variation de longueur du fait des structures différentes du terrain et qui varie en fonction de l'amplitude de la variation de hauteur nécessaire.
